Europäisches Patentamt

European Patent Office

Office européen des brevets

(11) Veröffentlichungsnummer: **0 524 488 A1**

# (12) EUROPÄISCHE PATENTANMELDUNG

(21) Anmeldenummer: **92111590.3**

(22) Anmeldetag: **08.07.92**

(51) Int. Cl.⁵: **B32B 27/28**, B32B 27/08, B32B 7/10

(30) Priorität: **17.07.91 DE 4123672**

(43) Veröffentlichungstag der Anmeldung:
**27.01.93 Patentblatt 93/04**

(84) Benannte Vertragsstaaten:
**BE DE FR GB IT NL**

(71) Anmelder: **BASF Aktiengesellschaft**
**Carl-Bosch-Strasse 38**
**W-6700 Ludwigshafen(DE)**

(72) Erfinder: **Blumenstein, Uwe, Dr.**
**Ganderhofstrasse 2**
**W-6700 Ludwigshafen(DE)**
Erfinder: **Bender, Dietmar, Dr.**
**Sebastian-Kneipp-Strasse 19**
**W-6707 Schifferstadt(DE)**
Erfinder: **Jenne, Helmut, Dr.**
**Grosser Moench 6**
**W-6905 Schriesheim(DE)**

(54) **Siegelfähige, peelbare Kunststoffolie.**

(57) Mehrschichtige, siegelfähige Kunststoffolie, im wesentlichen aus

A:   einer Deckschicht A aus einem wärmeformbeständigen Polymeren mit einem Schmelzpunkt oberhalb von 200°C,

B:   einem Haftvermittler B aus, bezogen auf B, 30 bis 95 Gew.-% eines Styrol-Butadien-Blockcopolymeren, bis 95 Gew.-% Polystyrol und/oder schlagzähem Polystyrol sowie 5 bis 70 Gew.-% eines mit Polystyrol unverträglichen Polymeren, das polare Gruppen enthält,

C:   einer Trägerschicht C aus 5 bis 100 Gew.-% eines Styrol-Butadien-Blockcopolymeren und bis zu 95 Gew.-% Polystyrol und/oder schlagzähem Polystyrol,

D:   im Bedarfsfalle einer Barriereschicht D, die der Deckschicht A entsprechen kann,

E:   einer Siegelschicht E, die nach ihrer Zusammensetzung im wesentlichen dem Haftvermittler B entspricht.

EP 0 524 488 A1

In der japanischen Patentveröffentlichung 41 872/79 wird ein Heißsiegelfilm beschrieben, der sich aus einem Ethylen-Acrylat-Copolymer und einem Styrol-Butadien-Blockcopolymer zusammensetzt; die jap. Pat.veröffentl. 137 242/78 benutzt dazu eine Mischung aus einem Styrol-Butadien-Blockcopolymer und/oder schlagzähem Polystyrol und einem Ethylen-Vinylacetatcopolymeren. Ähnliche Vorschläge für einen Siegelfilm, mit dem sich Polystyrol-Behälter versiegeln lassen, sind den weiteren Druckschriften

JA-047 462/78

JA-011 761/87

JA-133 735/87

JA-147 650/89

DE-A-2 944 344

zu entnehmen.

Haftung und Zähigkeit der beschriebenen Filme oder Folien sind jedoch nicht ausreichend.

In der EP-A-42 831 wird ein Deckelsystem beschrieben, das aus einer Siegel(=Träger-)Schicht, bestehend aus Poly-Ethylen-Vinylacetat und Homo-Polystyrol und einer Polyester-Deckschicht aufgebaut ist. Diese Schichten sind über einen Kleber verbunden, der nicht näher beschrieben ist. Polystyrol-Becher werden damit peelbar (abschälbar) gesiegelt.

Kunststoffdeckel sollen aus Gründen der leichteren Recyclierbarkeit den Aluminium-Deckel ablösen. Für diesen Zweck sind allerdings die bekannten Systeme nicht geeignet, denn sie sind zum größten Teil (>80 %) aus Materialien aufgebaut, die mit Polystyrol unverträglich sind. Zudem sind häufig die verwendeten Kleber vernetzt oder sie bestehen, wenn thermoplastisch, aus Polyurethan oder Polyacrylat, was zusammen mit der verwendeten Polyester-Trägerschicht die Recyclierbarkeit weiter einschränkt. Das bedeutet, daß eine Recyclierung zusammen mit Polystyrol (dem üblichen Bechermaterial) nicht möglich ist. Eine weitere Möglichkeit wäre eine Recyclat-Zugabe zur Siegelschicht. Die Erfahrung zeigt, daß gerade die Peelfähigkeit sehr empfindlich auf die Komposition der Anteile reagiert. Zugabe eines mit Polyester und Kleber verunreinigten Recyclats würde einen qualitätssicheren Verschluß von Polystyrol-Behältern nicht mehr gewährleisten.

Die DE-A 39 21 677 beschreibt ein komplettes Deckelsystem aus Heißsiegelschicht, Trägerschicht und Deckschicht, die gegebenenfalls noch durch Haftvermittler verbunden sind. Polymerbasis für Siegel- und Deckschicht sind schlagzähes Polystyrol und Styrol-Butadien-Blockcopolymere. Die Erfahrung zeigt, daß die Kombination von Zähigkeit, Haftung und Peelfähigkeit noch nicht ausreicht, um Aluminium-Deckel ersetzen zu können. Zudem erfordert häufig die coextrudierte Deckschicht aufgrund zu starker Delaminationsneigung einen Haftvermittler. Das bedingt den Einsatz von kostspieligen Coextrusionsanlagen.

Weiterhin bedingt die Natur der eingesetzten Siegelschicht, daß kleine Rückstände auf dem Becherrand verbleiben, was beim Endverbraucher Zweifel bezüglich der Reinheit des verpackten Lebensmittels aufkommen lassen kann.

Erfindungsgegenstand ist eine mehrschichtige, siegelfähige Kunststoffolie, im wesentlichen aus

A: einer Deckschicht A aus einem wärmeformbeständigen Polymeren mit einem Schmelzpunkt oberhalb von 200°C,

B: einem Haftvermittler B aus, bezogen auf B, 30 bis 95 Gew.-% eines Styrol-Butadien-Blockcopolymeren, bis 95 Gew.-% Polystyrol und/oder schlagzähem Polystyrol sowie 5 bis 70 Gew.-% eines mit Polystyrol unverträglichen Polymeren, das polare Gruppen enthält,

C: einer Trägerschicht C aus 5 bis 100 Gew.-% eines Styrol-Butadien-Blockcopolymeren und bis zu 95 Gew.-% Polystyrol und/oder schlagzähem Polystyrol,

D: im Bedarfsfalle einer Barriereschicht D, die der Deckschicht A entsprechen kann,

E: einer Siegelschicht E, die nach ihrer Zusammensetzung im wesentlichen dem Haftvermittler B entspricht.

Das erfindungsgemäße Deckellaminat vereinigt eine Reihe von Vorzügen, die die bekannten Vorschläge insgesamt nicht erreichen:

- Einfache Herstellung auf vorhandenen Coextrusionsanlagen

- Gute Recyclierbarkeit des Stanzabfalls und im fertigen Becher

- Gute Versiegelung und Peelbarkeit

- Keine Delamination beim Peelen, keine Rückstände auf dem Becherrand

- hohe Zähigkeit (kein Einreißen beim Peelvorgang, insbesondere bei Stülpdeckeln; kein Eindrücken beim Transport)

- Keine Migration von Inhaltsstoffen (z.B. Lösungsmitteln) oder unerwünschte Permeation (z.B. $O_2$, $H_2O$).

- Leichte Umstellbarkeit vorhandener Siegelanlagen von Aluminium auf Kunststoff,

- Geringe Empfindlichkeit der Peelbarkeit und Versiegelung von den Siegelbedingungen, insbesondere von Temperaturschwankungen
- Kein Kleben an den Siegelbacken
- Leichte Bedruckbarkeit
- Keine Änderung des Bechermaterials
- Kein Blocken der Folien und der Deckel
- Sterilisierbar (z.B. mit $H_2O_2$).

Diesen Anforderungen entspricht das erfindungsgemäße Deckellaminat, wie im folgenden ausgeführt wird. Es weist darüber hinaus rein herstellungstechnisch die folgenden Vorteile auf:

Die Schichten B und E bestehen erfindungsgemäß aus dem gleichen Material. Dadurch können Coextrusionsanlagen verwendet werden, die für ein Dreischichtsystem konstruiert sind.

Das verwendete Styrol-Butadien-Blockcopolymer ist in den Schichten B, C und E enthalten und bewirkt eine sehr feste Bindung der Schichten untereinander, so daß unter Aufreißbedingungen keine Delaminierung stattfindet.

Die Trägerschicht kann Recyclat, z.B. Haftvermittler-Stanzabfälle oder Randschnitt der Deckelfolie enthalten, ohne daß Siegel- oder HV-Eigenschaften beeinflußt werden. Das wird begünstigt durch den sehr ähnlichen Aufbau (Styrol-Butadien-Blockcopolymer) der Schichten B, C und E.

Die Verwendung von Haftvermittler und Siegelschicht identischer Zusammensetzung liefert genügend Material, um die an sich unverträgliche Deckschicht, die z.B. ein Polyester sein kann, zu kompatibilisieren und damit der Recyclierung ohne Abtrennung zugänglich zu machen. Dies ist ein großer Vorteil gegenüber Systemen, die Kleber und Lacke verwenden, oder gegenüber Aluminium.

Die Deckschicht A besteht aus einem Polymeren mit einer Schmelztemperatur oberhalb 200°C. Dafür kommen z.B. PBT, PET, PA und andere in Frage. Diese Materialien haben gegenüber üblicherweise bei Kunststoffdeckeln verwendeten Lackschichten den Vorteil, daß sie selber eine hohe Zähigkeit aufweisen und dadurch auch rigorosen Siegelbedingungen (große Kräfte, kleine Siegelflächen) standhalten können. Das ermöglicht z.B. den Einsatz in speziellen Siegelmaschinen, die eine hohe Verschlußsicherheit erreichen sollen. Außerdem wird durch die polymere Deckschicht das Wegfließen der darunterliegenden, weniger wärmeformbeständigen Schichten verringert.

Weiterhin dient die (polare) Deckschicht A zusätzlich als Barriere gegen Wasserdampf und Sauerstoff.

Die Einbettung der Trägerschicht C, die Recyclat enthalten kann, zwischen zwei andere Schichten verhindert den Übergang (Migration) von evtl. durch das Recyclat eingebrachten Substanzen, die zwar an sich nicht toxisch sind, jedoch die Organoleptik beeinträchtigen können. Dieser Effekt kann verbessert werden, indem man zusätzlich eine Barriereschicht D vorsieht. Die Barriereschicht D besteht in einfachsten Fällen aus dem Material der Deckschicht A. Sie kann auch aus einem anderen Material bestehen, jedoch ist dies technisch umständlicher zu verwirklichen.

Die erfindungsgemäße Folie kann auf vorhandenen Siegelanlagen ohne Änderungen an Werkzeugen oder Bechern verarbeitet werden.

Die bekannten Kunststoff-Folien erfordern einen Schutzlack, der das Kleben am Siegelwerkzeug verhindern soll. Die erfindungsgemäße Folie benötigt dagegen keinen Schutzlack. Die Deckschicht kann auch unmittelbar bedruckt werden.

Schicht A

Die Schicht A soll hochschmelzend sein und das Kleben der Heißsiegelfolien am Siegelkopf (Werkzeug) verhindern. Als Material für Schicht A eignen sich alle thermoplastisch verarbeitbaren Kunststoffe, deren Schmelzpunkt oder Erweichungsbereich oberhalb von 200°C, bevorzugt oberhalb von 230°C, liegt. Somit sind z.B. die in der Tabelle aufgeführten Kunststoffe geeignet:

Tabelle
Für Schicht A geeignete Materialien

| Übliche Bezeichnung | Chemische Zusammensetzung | Schmelztemperatur |
|---|---|---|
| Polyamid 6 | Polycaprolactam | 220 |
| Polyamid 6.6 | Polyhexamethylenadipinamid | 255 |
| Polyamid, copolymerisiert mit Butylenterephthalsäureester | Basis Hexamethylendiamin, Terephthalsäure, Caprolactam | 298 |
| Polybutylenterephthalat | Kondensat aus Terephthalsäure oder Dimethylphthalsäure und 1,4-Butandiol | 220 bis 225 |

Ferner seien genannt: Polyphenylenoxid und dessen Mischungen mit Polystyrol; Polysulfone; Polyethersulfone; Polyetherketone; LC-Polymere; Polyetherimide; kristallines Polyethylenterephthalat; Polyphenylensulfid; Polyamid-Imid-Copolymere oder Polyamide der Struktur von Polyamid 6.12; 11; 4.6 usw., entsprechend der Schmelztemperatur.

Schicht B

Die Schicht B hat die Eigenschaft, sowohl haftvermittelnd zwischen Träger- und Deckschicht als auch - als mit B identische Schicht E - heißsiegelfähig zu sein. Voraussetzung für diese Doppelfunktion ist, daß es sich um eine Mischung von mindestens zwei Polymeren handelt. Das eine Polymere entspricht einem Bestandteil von Schicht C. Dadurch wird die Haftvermittlung zur Trägerschicht C gewährleistet.

Das andere Polymere muß mit Styrolpolymeren unverträglich sein und polare Gruppen enthalten. Die erste Eigenschaft verhindert das Verschweißen mit dem Bechermaterial, das typischerweise aus Polystyrol besteht. Die zweite Eigenschaft bewirkt genügend starke Wechselwirkungen mit der wärmeformbeständigen polaren Schicht A, um eine Haftvermittlung zu erreichen, die stärker ist als die Haltekraft der Siegelung zum Bechermaterial.

Als unverträglich werden zwei Polymere bezeichnet, deren Mischung zwei Glastemperaturen liefert, die sich nicht mit der Zusammensetzung des Systems ändern (H.G. Elias, "Makromoleküle", Band 1, 5. Auflage, Hüthig und Wepf Verlag (1990), Seite 680).

Als polare, mit dem Material der Schicht C unverträgliche Polymere kommen in Frage:
- Copolymere, die 70 bis 90 % Styrol und 10 bis 30 % Acrylnitril enthalten;
- Copolymere, die 50 bis 90 % Styrol und 10 bis 50 % eines Alkylacrylats oder -methacrylats enthalten;
- Methyl(meth)acrylat;
- Polyethylene und/oder Copolymerisate des Ethylens, die Ethylen im Überschuß enthalten mit polaren Comonomeren. Beispiele für polare Comonomere sind Vinylalkohol, Vinylacetat, Methylacrylat, Ethylacrylat, Butylacrylat, Acrylsäure. Zu dieser nicht erschöpfenden Aufzählung gehören auch die Ionomere, wie sie z.B. in H. Domininghaus, "Die Kunststoffe und ihre Eigenschaften", 3. Auflage, VDI-Verlag (1988), Seite 125 ff. beschrieben sind;
- Polare, beispielsweise durch Chlorierung, Sulfochlorierung, Phosphorylierung, Sulfophosphorylierung, Sulfierung und Oxidation modifizierte Polyethylene.
- Polar gepfropfte Polyethylene und Copolymere des Ethylens;
- Polyvinylchlorid oder Polyvinylidenchlorid, sowie Mischungen aus diesen mit Polyethylenen und Polyethylen-Copolymeren sowie Mischungen mit Acryl-Polymeren oder Vinylidenchlorid-Acrylnitril-Copolymeren.

Weitere polare mit Styrolpolymeren unverträgliche Polymere sind z.B. Polyvinylalkylether, Polyvinylalkohol, Polyvinylacetal, Polyvinylacetat und dessen Copolymere und Polyethylenoxid.

Schicht C

Die Schicht C der erfindungsgemäßen siegelfähigen Kunststoff-Folie ist als Träger (Trägerfolie) der heißsiegelfähigen Kunststoff-Folie zu bezeichnen. Als Träger sind im Prinzip alle thermoplastisch verarbeitbaren Stoffe auf Basis von Styrol und Butadien geeignet, also schlagfestes Polystyrol, Styrol-Butadien, Blockcopolymere, Mischungen aus Styrol-Homopolymerisaten oder Styrol-Butadien-Pfropfcopolymerisaten mit Styrol-Butadien-Blockcopolymeren. Geeignet sind auch Blends, die eine der obigen Komponenten auf Basis Polystyrol und weitere mit Polystyrol verträgliche Komponenten (wie z.B. Polyphenylenether) oder über Verträglichkeitsvermittler verträgliche Komponenten (wie z.B. Polyethylen nach der EP-A-310 051) enthalten.

Als Schicht C bevorzugt ist ein Blockcopolymerisat aus mindestens einem Block von Styrol und mindestens einem Block eines konjugierten Diens aus der Gruppe von Butadien und Isopren oder Gemischen davon.

Das Blockcopolymere kann aus nur zwei Blöcken bestehen, es kann linear oder verzweigt aufgebaut sein. Blockcopolymere und Verfahren zu ihrer Herstellung sind beschrieben in DE-AS 108 491, DE-AS 16 45 406, DE-AS 14 20 698, US-PS 3 030 364. Verzweigte Produkte sind aus DE-AS 19 34 348, DE-AS 19 59 922 bzw. DE-AS 25 50 227 bekannt. Auch Verfahren zur Herstellung verzweigter Blockcopolymerisate sind dort oder in DE-OS 32 48 746 beschrieben. Das Blockcopolymerisat kann selektiv oder nicht selektiv hydriert sein.

Bevorzugt werden Styrol-Butadien-Blockcopolymerisate mit "scharfem" oder "verschmiertem" Übergang. Als Styrol-Butadien-Block-Copolymeres kann dabei jedes Blockcopolymere ohne Einschränkung auf seinen Aufbau eingesetzt werden, sofern seine Herstellung nach dem anionischen Lösungspolymerisationsverfahren mit einer Alkyl-Lithium-Verbindung als Katalysator erfolgt. Dabei können sowohl elastomere Styrol-Butadien-Blockcopolymere als auch harzartige Styrol-Butadien-Blockcopolymere mit einem Butadien-Anteil von weniger als 50 Gew.-% gebildet werden. Verwendet man elastomere Styrol-Butadien-Blockcopolymere mit einem Butadien-Anteil über 50 Gew.-%, so liegt deren Anteil im Gemisch, bevorzugt zwischen 20 und 40 Gew.-%, kann jedoch auch höher oder niedriger sein.

Harzartige Styrol-Butadien-Blockcopolymere mit einem Styrolgehalt von mehr als 50 Gew.-%, insbesondere 60 bis 95 Gew.-% werden bevorzugt verwendet.

Geeignet sind auch Mischungen des Blockcopolymeren mit anderen Styrolpolymeren. Beispiele dafür sind Mischungen mit Polystyrol oder schlagzähem Polystyrol. Generell kommen Homopolymerisate oder Copolymerisate von Styrol mit einem der eng verwandten insbesondere methylsubstituierten Styrole in Frage, in denen ein Methylrest als Substituent am aromatischen Ring oder an der Seitenkette vorhanden ist. Hier sind vor allem p-Methylstyrol oder $\alpha$-Methylstyrol zu erwähnen. Diese Copolymerisate können aus Styrol bzw. substituiertem Styrol in an sich bekannter Weise hergestellt werden. Als Styrolpolymerisate kommen ferner Pfropfmischpolymerisate in Frage, die durch Polymerisation von Styrol oder substituiertem Styrol in Gegenwart eines Kautschuks z.B. eines Butadienpolymerisates oder kautschukartigen Styrol-Butadien-Polymerisaten hergestellt werden. Der Polybutadiengehalt kann 3 bis 20 Gew.-%, vorzugsweise 5 bis 12 Gew.-%, bezogen auf die Polystyrol-Mischkomponente, betragen. Der mit Styrol gepfropfte Kautschuk (Weichphase) liegt dabei fein dispergiert in einer als Hartmatrix bezeichneten Polystyrolphase vor. Die Herstellung schlagfesten Polystyrols ist bekannt. Polystyrol und Polymerisate substituierter Styrole sind ebenso wie die schlagfesten Polystyrole handelsüblich. Die Viskositätszahl soll im Bereich von 60 bis 120 ml/g, gemessen in 0,5 %iger Lösung in Toluol bei 23°C, liegen.

Schicht D

Schicht D entspricht in der Zusammensetzung Schicht A; es wird auf die obenstehenden Angaben verwiesen.

Schicht E

Schicht E entspricht in der Zusammensetzung Schicht B.

Jede Schicht kann die für die jeweiligen Polymeren typische Zusatzstoffe enthalten; z.B. Füllstoffe, Farbstoffe, Pigmente, Antistatika, Antioxidantien, Schmiermittel und Weichmacher, die in den entsprechenden Werkstoffen üblich sind.

Die erfindungsgemäße heißsiegelfähige Kunststoff-Folie wird bevorzugt nach dem Coextrusionsverfahren hergestellt. Dieses Verfahren ist bekannt. Die Coextrusion kann bei Massetemperaturen zwischen etwa 170°C und 350°C erfolgen. Dabei werden die einzelnen Komponenten in verschiedenen Extrudern aufgeschmolzen und entweder in Mehrfachbreitschlitz- oder Ringdüsen zusammengefügt oder es erfolgt die Zusammenführung der Schichten in einem Adapter. Daneben besteht auch die Möglichkeit, eine oder mehrere Schichten jeweils durch Kaschieren miteinander zu verbinden.

Bei der Extrusion kann die Dicke der einzelnen Schichten, z.B. durch Variation der Extruderdrehzahlen den Anforderungen an die fertigen Folien angepaßt werden.

Im einzelnen ist dazu folgendes zu sagen:

Bei Deckelfolien gibt es im Prinzip zwei Schichtdickenbereiche. Zum einen wird mit Flachfolien gearbeitet, deren Gesamtstärke zwischen 80 und 120 (150) $\mu$m liegt. Zum anderen werden stärkere Folien verwendet, die eine Schichtdicke von 180 - 250 $\mu$m besitzen und nach Thermoformung als Stülpdeckel eingesetzt werden.

In diesen Folien wird aus Kostengründen die Trägerschicht C die stärkste aller Schichten darstellen. Sie weist z.B. eine Dicke von 50 bis 100 bzw. 50 bis 200 $\mu$m auf. Die anderen Schichten werden entsprechend dem Fachkönnen des Folienherstellers so dünn wie möglich gehalten (z.B. 5 bis 30 $\mu$m). Nach unten begrenzt wird die minimale Schichtdicke durch die Schichtdickenschwankungsbreite. Das gilt vor allen Dingen für die Schichten B, D und E, die i.a. 10 - 20 $\mu$m stark sind. Um die Zähigkeit zu verbessern, kann bei der Schicht A von dem Kostenminimierungsprinzip abgewichen werden, d.h., statt 10 - 20 $\mu$m können daher auch bis zu 30 $\mu$m sinnvoll sein.

Verwendung der heißsiegelfähigen Kunststoff-Folie

Die so entstandenen Heißsiegelfolien werden auf den üblichen, für das Heißsiegeln verwendeten Verschließeinrichtungen auf Behälter aus Styrolpolymerisaten, z.B. aus Styrolhomopolymerisat, Styrol-Butadien-Pfropfpolymerisat oder Blockcopolymerisat bzw. Mischungen aus diesen Stoffen aufgesiegelt. Die Behälter können auch aus anderen Styrolpolymerisaten bestehen, beispielsweise solchen, die einen gewissen Anteil an Copolymeren wie Acrylnitril enthalten. Sehr häufig werden für Verpackungen Mehrschichtfolien verwendet. Auch diese sind geeignet für das Verschließen mit diesen heißsiegelfäigen Kunststoff-Folien unter der Voraussetzung, daß die Innenschicht, auf die der Deckel aufgesiegelt wird, aus einem Styrolpolymerisat besteht, das gegen die Komponente D bzw. F der heißsiegelfähigen Folie siegelt.

Die Siegelbedingungen sind bei vorgegebener Form des Siegelkopfes durch die Temperatur des Siegelkopfes, den Druck während des Siegelvorgangs und die Siegelzeit beschrieben. Die Siegelbedingungen sind wegen der im Vergleich zu Aluminiumfolien niedrigen Wärmeleitfähigkeit der siegelfähigen Kunststoff-Folie sehr stark von der Dicke der siegelfähigen Kunststoff-Folie abhängig. Beispielsweise kann bei 200° C Siegeltemperatur und 2 bar Siegeldruck eine 0,1 mm dicke Folie schon in 0,2 bis 0,3 sec befriedigend gesiegelt werden, während unter den selben Bedingungen eine 0,25 mm dicke Folie 0,8 bis 1 sec Siegelzeit benötigt.

Geeignete Siegelbedingungen liegen je nach Art der Komponente A der heißsiegelfähigen Kunststoff-Folie bei Drucken von 1 bis 5 bar, Siegeltemperaturen von 140 bis 280° C und Siegelzeiten von 0,1 bis 2 sec.

Beispiel 1

Nach dem Verfahren der Coextrusion wird eine siegelfähige Kunststoff-Folie aus folgenden Materialien hergestellt:
Schicht A:
Polybutylenterephthalat, Schmelzpunkt 220 bis 225° C bestimmt nach ISO 1218.
Schicht B:
80 % eines sternförmigen Styrol-Butadien-Blockcopolymerisats, hergestellt durch anionische Polymerisation, Viskositätszahl 0,5 %ig in Toluol = 84 ml/g mit einem Polybutadiengehalt von 20 %.
20 % eines Ethylen-Vinylacetat-Copolymeren mit einem Vinylacetatgehalt von 28 %.
Schicht C:
Ein sternförmiges Styrol-Butadien-Blockcopolymerisat, hergestellt durch anionische Polymerisation, Viskositätszahl 0,5 %ig in Toluol = 84 ml/g mit einem Polybutadiengehalt von 20 %.
Schicht E:
Mit B identisch.
C wird durch einen Hauptextruder, A durch einen Seitenextruder und B und E durch einen Seitenextruder mit Verzweigung einer Mehrfach-Breitschlitzdüse derart zugeführt, daß sich die nachstehenden Schichtstärken ergeben:

| Schicht A: | 20 $\mu$m |
|---|---|
| Schicht B: | 10 $\mu$m |
| Schicht C: | 110 $\mu$m |
| Schicht E: | 10 $\mu$m |

Die Verarbeitungstemperaturen der Formmassen waren

| Komponente A: | 250° |
|---|---|
| Komponente B: | 190° |
| Komponente C: | 200° |
| Komponente E: | 190° |

Vergleichsversuch 1

Eine 40 $\mu$m dicke Aluminium-Folie mit Siegellack auf Acrylatbasis.

Vergleichsversuch 2

Eine Folie gemäß Anspruch 6 der DE 39 21 677 (vier Schichten, vier Extruder).

Beispiel 2

Wie Beispiel 1; ergänzt wird das Schichtsystem durch eine weitere Verzweigung eines Seitenextruder-Ausgangs um die Schicht D.

Die erzielten Materialstärken waren

| Schicht A: | 10 μm |
|---|---|
| Schicht B: | 10 μm |
| Schicht C: | 110 μm |
| Schicht D: | 10 μm |
| Schicht E: | 10 μm |

Die für die Beurteilung des Siegelverhaltens verwendeten Parameter wurden wie folgt bestimmt:

1. Siegelbedingungen bei unterschiedlicher Einstellung des Siegelkopfes nach Temperatur (°C), Druck (bar) und Zeit (sec). Die Folien wurden auf handelsübliche thermogeformte Verpackungsbecher aus schlagfestem Polystyrol, Butadiengehalt von 6 %, Vicatzahl 90°C (DIN 53 460, Verfahren A), Meltindex 4 g/10 min (MFI: 200°C/5 nach DIN 53 735) aufgesiegelt.

2. Bestimmung der Abschälfestigkeit vom Becher

Verpackungsbecher wurden unter verschiedenen Bedingungen versiegelt und mit einer speziell angefertigten Vorrichtung die Abschälfestigkeit der Siegelfolie vom Becher bestimmt. Dazu wurden die Becher auf den Tisch einer Universal-Druck- und Zugmaschine gestellt und festgelegt. Eine vorstehende Ecke des aufgesiegelten Deckels wurde gefaßt und über eine Verlängerung mit der oberen Spannbacke der Prüfmaschine verbunden.

Mit einer Beanspruchungsgeschwindigkeit von 10 mm/min wurde die Zugkraft aufgebaut und der Deckel abgezogen. Bestimmt wurde die Zugkraft bis zum ersten Anriß und die Weiterreißkraft an der Siegelnaht in der Deckelmitte (Zugkraft gemessen in Newton).

| Beispiel | Siegelbedingungen | | | Schälfestigkeit | |
|---|---|---|---|---|---|
| | Temperatur [°C] | Druck [bar] | Zeit [sec] | Kraft bis zum 1. Anriß [N] | Weiterreißkraft in Deckelmitte [N] |
| 1 | 220 | 2 | 0,5 | 19,5 | 3,0 |
| 1 | 240 | 2 | 0,5 | 23,7 | 3,3 |
| 1 | 260 | 2 | 0,5 | 28,2 | 3,5 |
| Vergl. 1 | 220 | 2 | 0,2 | 27,2 | 3,2 |
| " | 240 | 2 | 0,2 | 26,3 | 3,2 |
| " | 260 | 2 | 0,2 | 29,5 | 3,5 |
| Vergl. 2 | 220 | 2 | 1 | 21,3 | 2,2 |
| " | 240 | 2 | 1 | 20,0 | 2,3 |
| " | 260 | 2 | 0,8 | 3,2 | < 0,5 |
| 2 | 220 | 2 | 0,5 | 19,2 | 2,5 |
| 2 | 240 | 2 | 0,5 | 22,2 | 3,7 |
| 2 | 260 | 2 | 0,5 | 27,5 | 3,3 |

**Patentansprüche**

1. Mehrschichtige, siegelfähige Kunststoffolie, im wesentlichen aus

    A:    einer Deckschicht A aus einem wärmeformbeständigen Polymeren mit einem Schmelzpunkt oberhalb von 200°C,

B:     einem Haftvermittler B aus, bezogen auf B, 30 bis 95 Gew.-% eines Styrol-Butadien-Blockcopolymeren, bis 95 Gew.-% Polystyrol und/oder schlagzähem Polystyrol sowie 5 bis 70 Gew.-% eines mit Polystyrol unverträglichen Polymeren, das polare Gruppen enthält,

C:     einer Trägerschicht C aus 5 bis 100 Gew.-% eines Styrol-Butadien-Blockcopolymeren und bis zu 95 Gew.-% Polystyrol und/oder schlagzähem Polystyrol,

D:     im Bedarfsfalle einer Barriereschicht D, die der Deckschicht A entsprechen kann,

E:     einer Siegelschicht E, die nach ihrer Zusammensetzung im wesentlichen dem Haftvermittler B entspricht.

2.    Folie nach Anspruch 1, enthaltend einen Haftvermittler B aus 50 bis 90 Gew.-% Blockcopolymer, bis 80 Gew.-% Polystyrol bzw. schlagzähes Polystyrol und 10 bis 50 Gew.-% polare Gruppen enthaltendes Polymer sowie eine Trägerschicht C aus 20 bis 95 Gew.-% Blockcopolymer und 5 bis 80 Gew.-% Polystyrol bzw. schlagzähes Polystyrol.

3.    Folie nach Anspruch 1, enthaltend eine Deckschicht A bzw. eine Barriereschicht D aus Polyamid oder Polyester.

| Europäisches Patentamt | EUROPÄISCHER RECHERCHENBERICHT | Nummer der Anmeldung |
| | | EP 92 11 1590 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,Y | EP-A-0 475 887 (ALUSUISSE-LONZA SERVICES AG) <br> * Seite 3, Zeile 40 - Zeile 46; Ansprüche 1,10,12,13,21 * <br> --- | 1-3 | B32B27/28 <br> B32B27/08 <br> B32B7/10 |
| D,Y | DE-A-3 921 677 (BASF AG) <br> * Seite 2, Zeile 50 - Seite 3, Zeile 7 * <br> * Seite 3, Zeile 45 - Zeile 65 * <br> * Seite 4, Zeile 2 - Zeile 67 * <br> * Seite 5, Zeile 5 - Zeile 37 * <br> --- | 1-3 | |
| A | US-A-4 110 500 (EVANS ET AL.) <br> * Spalte 3, Zeile 30 - Zeile 43; Ansprüche 1,2 * <br> --- | 1 | |
| A | EP-A-0 203 425 (GENERAL ELECTRIC COMPANY) <br> * Spalte 4, Zeile 23 - Spalte 5, Zeile 38; Ansprüche 1,3,5,8-10,13,15,17 * <br> * Spalte 7, Zeile 29 - Spalte 8, Zeile 23 * <br> --- | 1 | |
| A | EP-A-0 024 270 (UCB, S.A.) <br> * Seite 6, Zeile 3 - Zeile 33; Anspruch 1; Beispiel 2C; Tabellen 2,4 * <br> ----- | 1 | RECHERCHIERTE SACHGEBIETE (Int. Cl.5) <br><br> B32B |

Der vorliegende Recherchenbericht wurde für alle Patentansprüche erstellt

| Recherchenort | Abschlußdatum der Recherche | Prüfer |
|---|---|---|
| DEN HAAG | 05 NOVEMBER 1992 | DERZ T. |